# EUROPEAN PATENT APPLICATION

(11) **EP 3 490 029 A1**
(43) Date of publication of application: **29.05.2019**
(21) Application number: 17845204.1
(22) Date of filing: 14.08.2017
(51) Int. Cl.: H01M 2/10, B60L 11/18

(54) **BATTERY MODULE, TRACTION BATTERY PACK AND AUTOMOBILE**

(30) Priority: 30.08.2016 CN 201610761833
(71) Applicant: BYD Company Limited, Shenzhen, Guangdong 518118 (CN)
(72) Inventor: TONG, Zhiwei, Shenzhen Guangdong 518118 (CN); LAI, Qing, Shenzhen Guangdong 518118 (CN); ZHU, Jianhua, Shenzhen Guangdong 518118 (CN); ZHU, Yan, Shenzhen Guangdong 518118 (CN)
(74) Representative: Hoffmann Eitle
(86) International application number: PCT/CN2017/097403
(87) International publication number: WO 2018/040902

(57) **Abstract**

The disclosure relates to a battery module, a power battery pack, and a vehicle. The battery module includes a plurality of intermediate separators stacked in a left and right direction on the battery module, a plurality of cells, a mounting plate provided on a front side of the battery module, and a ventilator fixed on the mounting plate. The intermediate separator is provided with an intermediate heat-dissipation air plate, and an intermediate heat-dissipation air passage penetrating through a front and rear direction is formed inside the intermediate heat-dissipation air plate. Heat is exchanged between a left side face of the intermediate heat-dissipation air plate and a right side face of a cell on a left side of the intermediate heat-dissipation air plate, and is exchanged between a right side face of the intermediate heat-dissipation air plate and a left side face of a cell on a right side of the intermediate heat-dissipation air plate. The intermediate heat-dissipation air plate has a first tuyere and a second tuyere, a cavity is provided between the mounting plate and a front end face of the cell, the first tuyere leads to the cavity, and the second tuyere is provided on a rear side of the battery module and leads to outside of the battery module. The battery module in the disclosure has high heat dissipation efficiency, and can resolve a heat dissipation problem during rapid charge/discharge (charge/discharge in a high rate of 3 to 6C).

## Description

### FIELD

The disclosure relates to the technical field of new energy vehicles, and in particular, relates to a battery module, a power battery pack and a vehicle.

### BACKGROUND

A power battery pack is an energy supply device for a new energy vehicle. Generally, the power battery pack is composed of a plurality of battery modules arranged side by side, and each battery module is formed of a plurality of batteries that are stacked.

During charge/discharge of the battery module, heat is generated. If the heat is not dissipated in a timely manner, performance of the battery module is affected, or even danger is caused. The heat of the battery module is usually dissipated through air cooling and water cooling.

Existing heat dissipation solutions through air cooling for the battery module are as follows:
(1) An air-cooling heat-dissipation plate is placed on a bottom of the battery module, and a cell is in contact with the heat-dissipation plate only at a bottom face, and therefore heat of only a small area is dissipated, and heat dissipation efficiency is limited.
(2) A heat-dissipation plate is placed on a top face and a bottom face of the battery module, and a top face and a bottom face of a square electrochemical cell (the cell) are separately in close contact with the two heat-dissipation plates. Although heat dissipation is slightly increased compared with that in the first solution, manufacturing costs are increased by 60-80%.
(3) The electrochemical cell conducts heat by using a vapor chamber (a heat pipe) to a heat dissipator or a tray on the bottom of the battery module, and heat is taken away from the power battery pack by using an air-cooling structure provided on the tray.

In the foregoing solutions (1) and (2), according to different arrangements of the cells, a heat dissipation area proportion of the electrochemical cell (a percentage of a contact area between the heat-dissipation plate and the cell in a surface area of the electrochemical cell) varies from 5% to 25%, where a heat dissipation effect is limited, and a rate of the battery module may vary from 1 to 2C. In addition, the heat-dissipation plate required in the solution (2) has a large volume and costs high, and consequently is difficult to apply to a power battery pack in a sealed state.

The air-cooling heat dissipation structure in the foregoing solution (3) has a smaller volume, but conducting efficiency of the heat pipe is relatively low, and heat dissipation efficiency of a tray heat dissipator is not high (a heat dissipation area is limited). Therefore, in this solution, a continuous charge/discharge rate of the power battery pack can only be within 1C, and a heat dissipation problem of battery module during rapid charge/discharge (charge/discharge in a high rate of 3 to 6C) cannot be resolved.

In addition, all the foregoing three air-cooling heat dissipation solutions cannot be used to implement a function of heating the power battery pack.

### SUMMARY

A technical problem to be resolved in the disclosure is to provide a battery module to resolve a disadvantage that a heat dissipation area of an existing battery module air-cooling heat dissipation structure is small, and heat dissipation efficiency of the existing battery module air-cooling heat dissipation structure is limited.

The technical solutions used in disclosure to resolve the foregoing technical problem are as follows.

A battery module is provided, including: a plurality of intermediate separators stacked along the battery module, a plurality of cells, a mounting plate provided on a front side of the battery module, and a ventilator fixed on the mounting plate. And an intermediate heat-dissipation air plate is provided on the intermediate separator, an intermediate heat-dissipation air passage penetrating through a front and rear direction is formed inside the intermediate heat-dissipation air plate. Heat is exchanged between a left side face of the intermediate heat-dissipation air plate and a right side face of a cell on a left side of the intermediate heat-dissipation air plate, and heat is exchanged between a right side face of the intermediate heat-dissipation air plate and a left side face of a cell on a right side of the intermediate heat-dissipation air plate. The intermediate heat-dissipation air passage has a first tuyere and a second tuyere, a cavity is provided between the mounting plate and a front end face of the cell, the first tuyere leads to the cavity, and the second tuyere is provided on a rear side of the battery module and leads to outside of the battery module.

Further, the intermediate heat-dissipation air plate and the intermediate separator are integrally formed.

Further, a guide groove is provided on an upper side and a lower side of the intermediate heat-dissipation air plate, and a guide rail that fits the guide groove through sliding insertion is provided on a corresponding location on the intermediate separator.

Further, the guide groove extends in a front and rear direction of the upper side or the lower side of the intermediate heat-dissipation air plate, a bayonet is provided on one end of the guide groove, a limiting block is provided on a location that is on the guide rail and that corresponds to the bayonet, and the limiting block is snapped into the bayonet to limit a location at which the guide groove is inserted into the guide rail.

Further, a snap-gauge is provided on the other end of the guide groove, and an anti-detachment barb is provided on a location that is on the guide rail and that corresponds to the snap-gauge, and the anti-detachment barb can hook the snap-gauge when the guide groove is inserted in place, to prevent the guide rail from coming out of the guide groove.

Further, a plurality of laminates are provided inside the intermediate heat-dissipation air plate, where the laminates are configured to separate the intermediate heat-dissipation air passage into a plurality of unit air passages.

Further, a plurality of raised lines are provided in the unit air passage.

Further, a first thermally conductive insulating pad is provided both between the left side face of the intermediate heat-dissipation air plate and the right side face of the cell on the left side of the intermediate heat-dissipation air plate and between the right side face of the intermediate heat-dissipation air plate and the left side face of the cell on the right side of the intermediate heat-dissipation air plate.

Further, the battery module further includes a bottom heat-dissipation air plate provided under a plurality of cells, and heat is exchanged between an upper surface of the bottom heat-dissipation plate and a lower surface of the cell. The bottom heat-dissipation air passage penetrating through a front and rear direction is formed inside the bottom heat-dissipation air plate, and the bottom heat-dissipation air passage has a third tuyere and a fourth tuyere. The third tuyere leads to the cavity, and the fourth tuyere is provided on a rear side of the battery module and leads to outside of the battery module.

Further, the bottom heat-dissipation air plate includes a heat-dissipation plate and a plurality of fins provided side by side on a bottom of the heat-dissipation plate. A bottom protective cover is provided under the bottom heat-dissipation air plate, and the bottom heat-dissipation air passage is formed between the bottom protective cover and the plurality of fins.

Further, a second thermally conductive insulating pad is interposed between the heat-dissipation plate and lower surfaces of the plurality of cells.

Further, a first side plate is fixedly provided on an external side of the cell that is on a rightmost side of the battery module, and a second side plate is fixedly provided on an external side of the cell that is on a leftmost side of the battery module.

Further, a right-side metal plate is fixed on an external side of the first side plate, and a left-side metal plate is fixed on an external side of the second side plate, a top protective cover is provided on a top of the battery module, a left side, a right side, an upper side, and a lower side of the mounting plate are respectively fixedly connected to the left metal plate, the right metal plate, the top protective cover, and the bottom protective cover, and a battery module management unit is fixedly provided on the mounting plate.

Further, the ventilator is a fan, the mounting plate is provided with a first fan mounting hole and a second fan mounting hole, and the fan is installed in the first fan mounting hole and the second fan mounting hole.

In addition, the disclosure further provides a power battery pack, and the power battery pack includes the plurality of battery modules.

Further, the intermediate heat-dissipation air passages in the plurality of battery modules have a same direction.

Further, the power battery pack further includes a housing consisting of a battery tray and a battery pack sealing cover, the battery pack sealing cover is connected to a top of the battery tray, to form battery module mounting space between the battery pack sealing cover and the battery tray, and a plurality of battery modules are provided at intervals in the battery module mounting space, to form an external air passage between two adjacent battery modules and/or between the battery module and an inner side wall of the housing. The external air passage leads to the intermediate heat-dissipation air passage and the cavity through the second tuyere.

Further, a plurality of battery modules are arranged in two rows of a same quantity, and edges of two battery modules in each column are flush, and the external air passage includes an external circulation air passage formed between the battery module and an inner side wall of the battery stray and an external central air passage formed between the two rows of battery modules. A semiconductor cooling/heating module is provided on two ends of the external central air passage, and the semiconductor cooling/heating module separates the external central air passage from the external circulation air passage. The external central air passage leads to outside of the power battery back via the semiconductor cooling/heating module, and one row of battery modules perform air inhale, and the other row of battery modules perform air blowing.

Further, a tray heat-dissipation air passage penetrating through the battery tray is provided at the bottom of the battery stray, and a spoiler is provided on an opening on a side of the stray heat-dissipation air passage towards a front direction of a vehicle, and the spoiler is provided with a spoiler air passage control cover that is used to open or close the opening on the side that is of the stray heat-dissipation air passage and that is towards the front direction of the vehicle.

According to the battery module and the power battery pack of the disclosure, the ventilator can inhale air from the second tuyere or blow air to the second tuyere via the intermediate heat-dissipation air passage and the cavity, so that the ventilator can enable air (cold air, air of a normal temperature, or hot air) to circularly flow in the intermediate heat-dissipation air passage. Heat is exchanged between the left side face of the intermediate heat-dissipation air plate and the right side face of the cell on the left side of the intermediate heat-dissipation air plate, and is exchanged between the right side face of the intermediate heat-dissipation air plate and the left side face of the cell on the right side of the intermediate heat-dissipation air plate, that is, heat is continuously exchanged between the intermediate heat-dissipation air plate and the left and right side faces with larger areas on the cell. An inner side wall of the intermediate heat-dissipation air passage is a heat exchange surface, and a ratio of the heat exchange surface to a surface area of the cell is far greater than 25%. When heat of the batter module needs to be dissipated, heat conducted from the cell is dissipated from the heat exchange surface, and is exchanged with air flowing through the intermediate heat-dissipation air passage, to dissipate the heat of the battery module. Heat dissipation efficiency of the battery module is higher compared with that in a conventional solution of adding heat-dissipation plates to a top and a bottom. Simulation and testing show that, in the disclosure, a battery module with cell energy of 50-80 Ah can implement continuous charge/discharge of 4C, and a battery module with cell energy of 20-40 Ah can implement continuous charge/discharge of 6C. It can be learned that the battery module can resolve a heat dissipation problem during rapid charge/discharge (charge/discharge of a high rate of 3-6C). In addition, when the battery module needs to be heated, heat in air flowing through the intermediate heat-dissipation air passage is conducted to the cells from a heat exchange surface by using the intermediate heat-dissipation air plate, to heat the battery module. In this way, a vehicle equipped with the power battery pack can adapt to a cold area.

In addition, the disclosure further provides a vehicle, and the vehicle includes the foregoing power battery pack.

### BRIEF DESCRIPTION OF THE DRAWINGS

FIG. 1 is a schematic diagram of a battery module in accordance with an embodiment of the disclosure;
FIG. 2 is an exploded view of a battery module in accordance with an embodiment of the disclosure;
FIG. 3 is a section view of a battery module obtained through vertical sectioning in a front and rear direction in accordance with an embodiment of the disclosure;
FIG. 4 is a section view of a battery module obtained through vertical sectioning in a left and right direction in accordance with an embodiment of the disclosure;
FIG. 5 is a schematic diagram of an intermediate heat-dissipation air plate of a battery module in accordance with an embodiment of the disclosure;
FIG. 6 is an exploded view of a battery module in accordance with an embodiment of the disclosure (a top protective cover is removed);
FIG. 7 is a rear view of a battery module in accordance with an embodiment of the disclosure (a top protective cover is removed);
FIG. 8 is a schematic diagram of assembly of a mounting plate, an intermediate heat-dissipation air plate, and a bottom heat-dissipation air plate of a battery module in accordance with an embodiment of the disclosure;
FIG. 9 is an exploded view of FIG. 8;
FIG. 10 is diagram of another view of FIG. 9;
FIG. 11 is a schematic diagram of locations of a cell and an intermediate heat-dissipation air plate of a battery module in accordance with an embodiment of the disclosure;
FIG. 12 is a schematic diagram of an assembly process of an intermediate separator and an intermediate heat-dissipation air plate of a battery module in accordance with another embodiment of the disclosure;
FIG. 13 is an enlarged view of a in FIG. 12;
FIG. 14 is a schematic diagram of an intermediate separator of a battery module in accordance with another embodiment of the disclosure;
FIG. 15 is an enlarged view of b in FIG. 14;
FIG. 16 is a schematic diagram of integral forming of an intermediate heat-dissipation air plate of a battery module on an intermediate separator in accordance with an embodiment of the disclosure;
FIG. 17 is a schematic diagram of an internal structure of a power battery pack in accordance with an embodiment of the disclosure;
FIG. 18 is an exploded view of a power battery pack in accordance with an embodiment of the disclosure (a spoiler air passage control cover is open);
FIG. 19 is an exploded view of a power battery pack in accordance with an embodiment of the disclosure (a spoiler air passage control cover is closed);

Reference signs in the drawings in the specification are as follows:
100. Battery module; 101. First side plate; 102. Right-side metal plate; 103. Second side plate; 104. Left-side metal plate; 105. Top protective cover; 106. Bottom protective cover; 107. Battery module management unit;
1. Intermediate separator; 11. Guide rail; 111. Limiting block; 112. Anti-detachment barb; 2. Cell; 3. Mounting plate; 31. First fan mounting hole; 32. Second fan mounting hole; 4. Fan; 4a. Air blowing fan; 4b. Air inhale fan; 5. Intermediate heat-dissipation air plate; 51. Intermediate heat-dissipation air passage; 511. First tuyere; 512. Second tuyere; 513. Unit air passage; 52. Laminate; 53. Raised lines; 54. Guide groove; 541. Bayonet; 542. Snap-gauge; 6. Cavity; 7. First thermally conductive insulating pad; 8. Bottom heat-dissipation air plate; 81. Bottom heat-dissipation air passage; 811. Third tuyere; 812. Fourth tuyere; 82. Heat-dissipation plate; 83. Fin; 9. Second thermally conductive insulating pad;
200. Battery tray; 201. Tray heat-dissipation air passage; 202. Spoiler; 203. Spoiler air passage control cover;
300. Battery pack sealing cover;
400. External air passage; 401. External circulation air passage; 402. External central air passage;
500. Semiconductor cooling/heating module
600. Internal circulation air passage protective cover.

### DETAILED DESCRIPTION

In order to make the technical problems resolved in the disclosure, technical solutions and beneficial effects more clear, the disclosure is further described in detail below with reference to the accompanying drawings and embodiments. It should be understood that specific embodiments described herein are merely intended to explain the disclosure instead of limiting the disclosure.

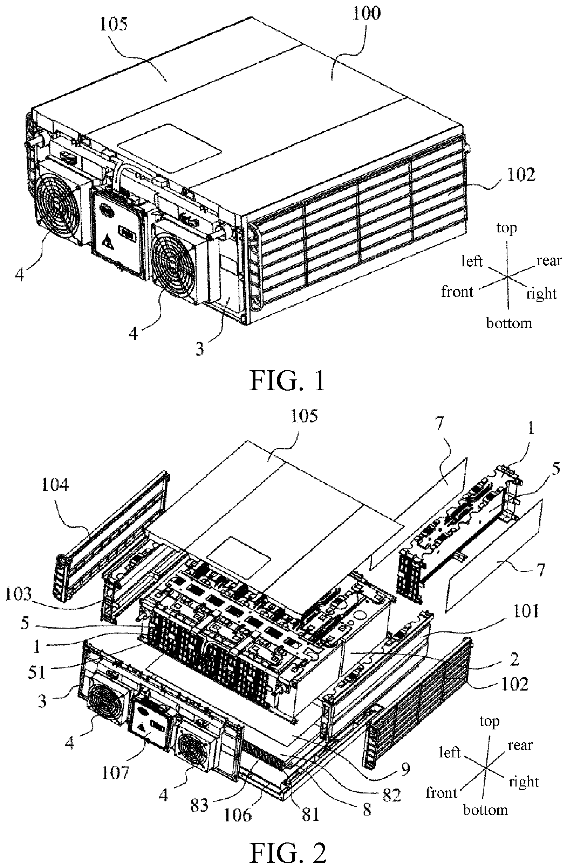

Hereinafter, for ease of clear description, it is defined that when a battery module is normally placed, an orientation at which a mounting plate is located is a front side of a battery module, and the front side is used as a reference for a left, right, rear, upper (top), and lower (bottom) of the battery module. For a specific orientation, refer to FIGs. 1, 2 and 6.

As shown in FIGs. 1-7, a battery module 100 provided in an embodiment of the disclosure includes a plurality of intermediate separators 1 stacked in a left and right direction in the battery module 100, a plurality of square cells 2, a mounting plate 3 provided on a front side of the battery module, and a fan 4 fixed on the mounting plate 3 used as a ventilator, And an intermediate heat-dissipation air plate 5 is provided on the intermediate separator 1, and an intermediate heat-dissipation air passage 51 penetrating through a front and rear direction is formed inside the intermediate heat-dissipation air plate 5. Heat is exchanged between a left side face of the intermediate heat-dissipation air plate 5 and a right side face of a cell 2 on a left side of the intermediate heat-dissipation air plate, and heat is exchanged between a right side face of the intermediate heat-dissipation air plate 5 and a left side face of a cell 2 on a right side of the intermediate heat-dissipation air plate. Areas of an upper surface, a lower surface, a front side face, and a rear side face of the square cell 2 are much smaller than areas of a left side face and a right side face. The intermediate heat-dissipation air passage 51 has a first tuyere 511 and a second tuyere 512, a cavity 6 is provided between the mounting plate 3 and a front end face of the cell 2. The first tuyere 511 leads to the cavity 6, and the second tuyere 512 is provided on a rear side of the battery module 100 and leads to outside of the battery module 100.

In this embodiment, two adjacent intermediate separators 1 are snap-fitted to implement stacking, while straining the cells 2.

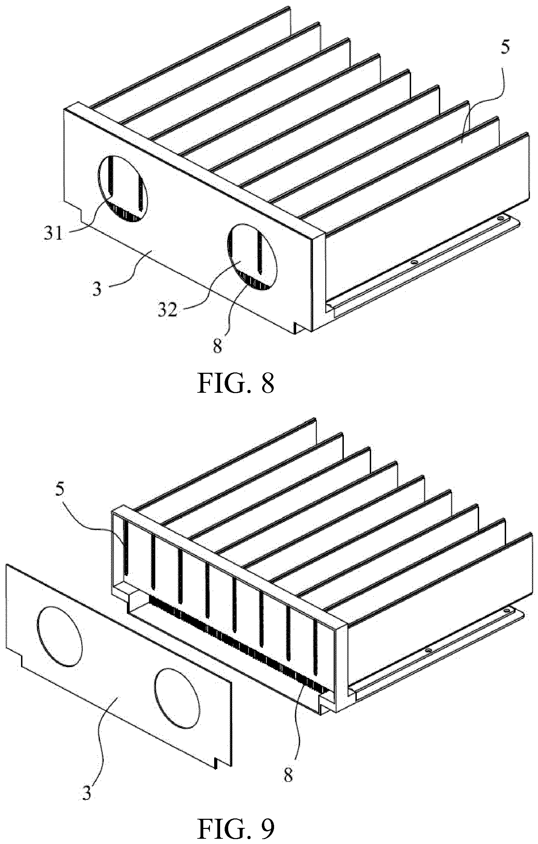

In this embodiment, as shown in FIGs. 1 and 8, there are two fans 4. The mounting plate 3 is provided with a first fan mounting hole 31 and a second fan mounting hole 32, and the fans 4 are mounted in the first fan mounting hole 31 and the second fan mounting hole 32, and are arranged at intervals in a left and right direction in the mounting plate 3. Certainly, in other embodiments, there may be one or more than three fans 4. This is designed based on a heat dissipation requirement.

Air inhale in this specification means to generate negative pressure in the cavity 6 by using an air inhale fan, and inhale air from a rear side of the battery module 100, so that air from the rear side of the battery module 100 is exhausted from a front side of the battery module 100 after flowing through the intermediate heat-dissipation air passage 51 (a bottom heat-dissipation air passage 81), the cavity 6, and the fan 4. Air blowing herein means to induce air from the front side of the battery module 100 by using an air blowing fan, so that air from the front side of the battery module 100 blows out from the rear side of the battery module 100 after flowing through the fan 4, the cavity 6, and the intermediate heat-dissipation air passage 51 (the bottom heat-dissipation air passage 81).

In this embodiment, the fan 4 with an air inhale function is used as an example for description. The first tuyere 511 is an air outlet of the intermediate heat-dissipation air passage 51, and the second tuyere 512 is an air inlet of the intermediate heat-dissipation air passage 51, respectively. The fan 4 may inhale air from the second tuyere 512 via the intermediate heat-dissipation air passage 51 and the cavity 6, that is, air outside the battery module 100 enters the second tuyere 512 and blows through the intermediate heat-dissipation air passage 51 and the cavity 6, to be exhausted from the battery module 100 via a front side of the fan 4.

When heat of the battery module 100 needs to be dissipated, the fan 4 inhales air (air of a normal temperature or cold air) outside the battery module 100 into the battery module 100, and heat of two larger side faces (left and right side faces) of the cells 2 is conducted to the intermediate heat-dissipation air plate 5 and is dispersed to the intermediate heat-dissipation air passage 51 along an inner side wall (a heat exchange surface) of the intermediate heat-dissipation air passage 51. The heat is blown away when air flows through the intermediate heat-dissipation air passage 51, to implement heat dissipation of the cell 2. On the contrary, when the battery module 100 needs to be heated, the fan 4 inhales air (hot air) outside the battery module 100 into the battery module 100, and heat in the air is conducted to the two larger side faces (the left and right side faces) of the cells 2 along the inner side wall of the intermediate heat-dissipation air passage 51 by using the intermediate heat-dissipation air plate 5, that is, the cell 2 is heated when air flows through the intermediate heat-dissipation air passage 51.

Certainly, in other embodiments, the fan 4 can also blow air. The first tuyere 511 is an air inlet of the intermediate heat-dissipation air passage 51, and the second tuyere 512 is an air outlet of the intermediate heat-dissipation air passage 51, respectively. The fan 4 may blow air to the second tuyere 512 via the intermediate heat-dissipation air passage 51 and the cavity 6, that is, air outside the battery module 100 is induced from a front side of the fan 4, and flows through the cavity 6 and the intermediate heat-dissipation air passage 51, and blows out from the second tuyere 512 (a rear side of the battery module 100).

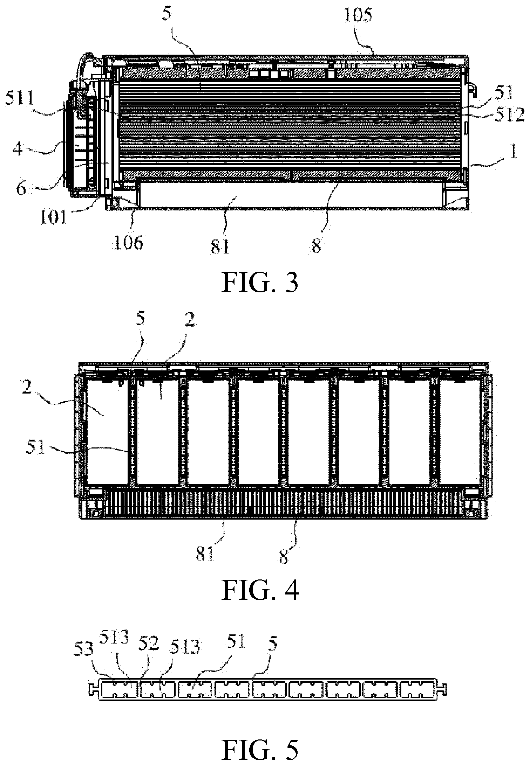

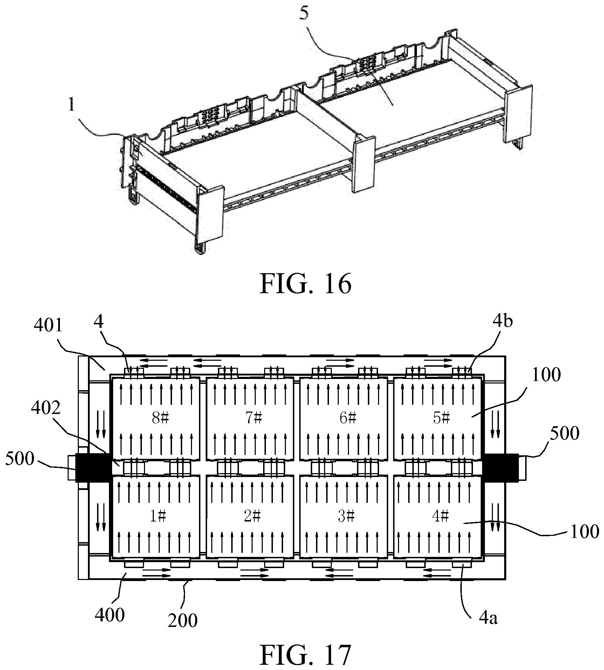

In this embodiment, as shown in FIGs. 5 and 16, the intermediate heat-dissipation air plate 5 and the intermediate separator 1 are integrally formed. For example, the intermediate heat-dissipation air plate 5 can be integrally formed (embedded into) on the intermediate separator 1 through injection molding, so that the intermediate separator 1 can be assembled in an arbitrary manner while having good extensibility and being simple in assembly, thereby improving assembly efficiency of a product. A T-shaped structure is provided on both sides of the intermediate heat-dissipation air plate 5 in a height direction, and the T-shaped structure has the functions of facilitating injection molding positioning and improving overall strength of a product.

As shown in FIG. 5, a plurality of laminates 52 are provided inside the intermediate heat-dissipation air plate 5, where the laminates are configured to separate the intermediate heat-dissipation air passage 51 into a plurality of unit air passages 513, and a plurality of raised lines 53 are provided in the unit air passage 513. In this embodiment, specifically, there are eight laminates 52. The intermediate heat-dissipation air passage 51 is divided into nine identical square unit air passages 513, and four raised lines 53 are provided in each unit air passage 513. The unit air passage 513 and the raised line 53 are integrally extruded, so that strength of an air passage plate can be greatly improved and extrusion deformation can be greatly reduced. In addition, the four raised lines 53 enlarge a heat exchange area of the intermediate heat-dissipation air passage 51, and enhance a turbulence scale of air flowing through the intermediate heat-dissipation air plate, thereby improving a heat exchange coefficient, and enhancing a heat dissipation effect.

As shown in FIG. 2, a first thermally conductive insulating pad 7 is provided both between the left side face of the intermediate heat-dissipation air plate 5 and the right side face of the cell 2 on the left side of the intermediate heat-dissipation air plate and between the right side face of the intermediate heat-dissipation air plate 5 and the left side face of the cell 2 on the right side of the intermediate heat-dissipation air plate. That is, the first thermally conductive insulating pad 7 is provided between the intermediate heat-dissipation air plate 5 and the unit cells 2 on both sides. The first thermal conductive insulating pad has a thermal conductivity of 1-2 W/Mk, and has good wear resistance and insulativity. The first thermal conductive insulating pad may be, but is not limited to, thermal rubber, a UTP100 thermally conductive insulating sheet, or the like.

As shown in FIGs. 2-11, the battery module 100 further includes a bottom heat-dissipation air plate 8 provided under the plurality of cells 2. Heat is exchanged between an upper surface of the bottom heat-dissipation plate 8 and a lower surface of the cell 2, and a bottom heat-dissipation air passage 81 penetrating through a front and rear direction is formed inside the bottom heat-dissipation air plate 8. The bottom heat-dissipation air passage 81 has a third tuyere 811 and a fourth tuyere 812, the third tuyere 812 leads to the cavity 6, and the fourth tuyere 812 is provided on the rear side of the battery module 100 and leads to outside of the battery module 100.

Corresponding to the fan 4 with an air inhale function, the third tuyere 811 is an air outlet of the bottom heat-dissipation air passage 81, and the fourth tuyere 812 is an air inlet of the bottom heat-dissipation air passage 81, respectively. The fan 4 can inhale air from the fourth tuyere 812 via the bottom heat-dissipation air passage 81 and the cavity 6. That is, air outside the battery module 100 enters the fourth tuyere 812 and blows through the bottom heat-dissipation air passage 81, the cavity 6, to be exhausted from the battery module 100 via a front side of the fan 4.

Certainly, in other embodiment, corresponding to the fan 4 with an air blowing function, the third tuyere 811 is an air inlet of the bottom heat-dissipation air passage 81, and the fourth tuyere 812 is an air outlet of the bottom heat-dissipation air passage 81. The fan 4 may blow air to the fourth tuyere 812 via the bottom heat-dissipation air passage 81 and the cavity 6, that is, air outside the battery module 100 is induced from a front side of the fan 4, and flows through the cavity 6 and the bottom heat-dissipation air passage 81, and blows out from the fourth tuyere 812 (the rear side of the battery module 100).

In this embodiment, the bottom heat-dissipation air passage 81 and the intermediate heat-dissipation air passage 51 are independent of each other.

In this embodiment, as shown in FIG. 2, the bottom heat-dissipation air plate 8 is a fin dissipator, and includes a heat-dissipation plate 82 and a plurality of fins 83 provided side by side on a bottom of the heat-dissipation plate 82, a bottom protective cover 106 is provided under the bottom heat-dissipation air plate 8, and the bottom heat-dissipation air passage 81 is formed between the bottom protective cover 106 and the plurality of fins 83. A second thermally conductive insulating pad 9 is interposed between the heat-dissipation plate 82 and lower surfaces of the plurality of cells 2. Functions of the second thermally conductive insulating pad 9 and the first thermally conductive insulating pad 7 are similar.

During startup of the fan 4, a negative pressure area is formed in the cavity 6 among the first tuyere 511 and the third tuyere 811 and the mounting plate 3. A magnitude and distribution of the negative pressure are related to a static pressure, a rotational speed, and a blast capacity of the fan, and optimal fan model, quantity, and mounting location can be determined through simulation and testing.

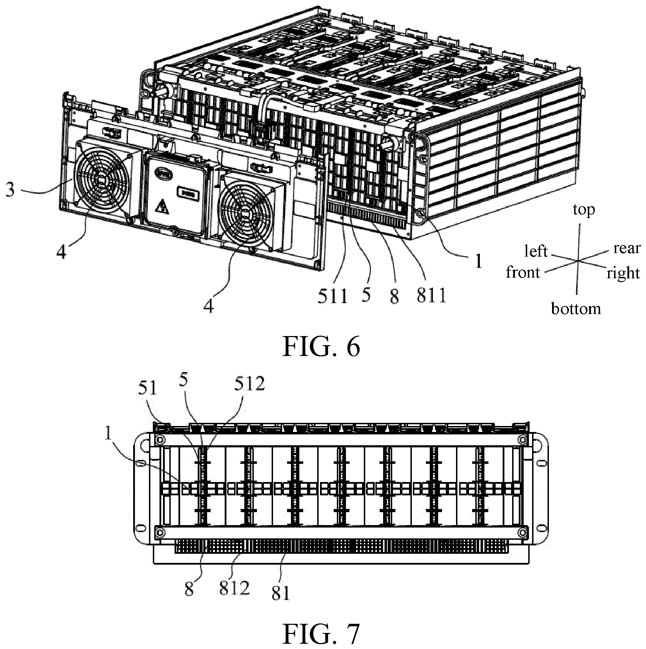

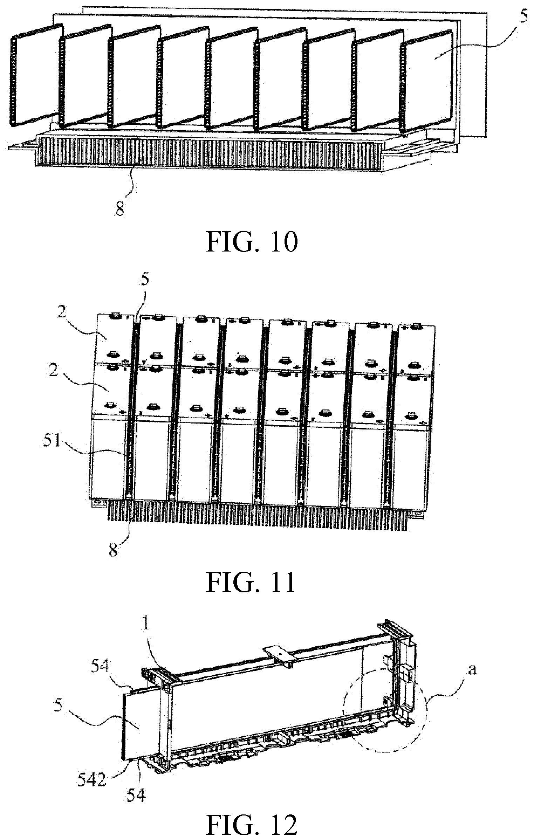

In this embodiment, a quantity of the intermediate heat-dissipation air plates 5 is related to arrangement of the cells 2. As shown in FIGs. 6 and 11, in this embodiment, both the left and right sides of the intermediate heat-dissipation air plate 5 are provided with two cells 2, the two cells 2 are flush in a front and rear direction, and the plurality of cells 2 are arranged in two rows in a left and right direction. In this way, heat is exchanged between the left side face of the intermediate heat-dissipation air plate 5 and right side faces of the two cells 2 on the left side of the intermediate heat-dissipation air plate, and is exchanged between the right side face of the intermediate heat-dissipation air plate 5 and left side faces of the two cells 2 on the right side of the intermediate heat-dissipation air plate. The intermediate heat-dissipation air plate 5 is located between the four cells 2, so that a volume of the battery module can be minimized while ensuring same heat dissipation efficiency of the battery module.

Certainly, in other embodiments, one cell 2 or more than three cells 2 can be separately provided on the left and right sides of intermediate heat-dissipation air plate 5.

When heat of the battery module 100 needs to be dissipated, the fan 4 inhales air (air of a normal temperature or cold air) outside the battery module 100 into the battery module 100 (the intermediate heat-dissipation air passage 51 and the bottom heat-dissipation air passage 81) via the second tuyere 512 and the fourth tuyere 812, and heat of two larger side faces (left and right side faces) of the cells 2 is conducted to the intermediate heat-dissipation air plate 5 and is dispersed to the intermediate heat-dissipation air passage 51 along an inner side wall (a heat exchange surface) of the intermediate heat-dissipation air passage 51. The heat is blown away when air flows through the intermediate heat-dissipation air passage 51, to implement heat dissipation of the cell 2. On the contrary, when the battery module 100 needs to be heated, the fan 4 inhales air (hot air) outside the battery module 100 into the battery module 100, and heat in the air is conducted to the two larger side faces (the left and right side faces) of the cells 2 along the inner side wall of the intermediate heat-dissipation air passage 51 by using the intermediate heat-dissipation air plate 5, that is, the cell 2 is heated when air flows through the intermediate heat-dissipation air passage 51.

As shown in FIGs. 8-11, in this embodiment, a plurality of intermediate heat-dissipation air plates 5 are provided in parallel. Sizes and proportions of air inlets of the plurality of intermediate heat-dissipation air plates 5 and a plurality of bottom heat-dissipation air plates 8 are optimized, so that an optimal dissipation effect and optimal temperature consistency can be achieved, thereby increasing a charge/discharge rate and a life of the battery module. Certainly, the quantity of the intermediate heat-dissipation air plates 5 is designed as required based on a quantity and arrangement of the cells.

Certainly, in other embodiments, the fan 4 may also blow air. The fan 4 may blow air to the second tuyere 512 via the intermediate heat-dissipation air passage 51 and the cavity 6, that is, air outside the battery module 100 is induced from an external side of the fan, and flows through the cavity 6 and the intermediate heat-dissipation air passage 51, and blows out from the second tuyere 512.

As shown in FIG. 2, a first side plate 101 is fixedly provided on an external side of the cell 2 that is on a rightmost side of the battery module 100, and a right-side metal plate 102 is fixed on an external side of the first side plate 101. A second side plate 103 is fixedly provided on an external side of the cell 2 that is on a leftmost side of the battery module 100, and a left-side metal plate 104 is fixed on an external side of the second side plate. Atop protective cover 105 is provided on a top of the battery module 100, and a bottom protective cover 106 is provided on a bottom of the battery module 100. The bottom heat-dissipation air plate 8 is provided between a lower surface of the plurality of cells 2 and the bottom protective cover 106, and a left side, a right side, an upper side, and a lower side of the mounting plate 3 are respectively fixedly connected to the left-side metal plate 104, the right-side metal plate 102, the top protective cover 105, and the bottom protective cover 106 by using a bolt. The top protective cover 105 is composed of three plates arranged side by side.

In addition, as shown in FIG. 2, a battery module management unit 107 is fixedly provided on the mounting plate 3.

According to the battery module in the foregoing embodiment of the disclosure, heat is exchanged between the left side face of the intermediate heat-dissipation air plate 5 and the right side face of the cell 2 on the left side of the intermediate heat-dissipation air plate, and is exchanged between the right side face of the intermediate heat-dissipation air plate 5 and the left side face of the cell 2 on the right side of the intermediate heat-dissipation air plate. That is, heat is continuously exchanged between the intermediate heat-dissipation air plate 5 and the left and right side faces with larger areas on the cell 2, and heat can be exchanged between the bottom heat-dissipation air plate 8 and a bottom of the cells 2. A ratio of a sum of a heat exchange surface of the intermediate heat-dissipation air passage 51 and a heat exchange surface of the bottom heat-dissipation air passage 81 and a surface area of the cell is greater than or equal to(≥) 75% (a ratio can be up to 75% in case of a C17 electrochemical cell, and a ratio can be up to 85% in case of a C20 electrochemical cell), and therefore heat dissipation efficiency is high. Simulation and testing show that, in the disclosure, a battery module with a cell capacity of 50-80 Ah can implement continuous charge/discharge of 4C, and a battery module with a cell capacity of 20-40 Ah can implement continuous charge/discharge of 6C. It can be learned that the battery module can be used to resolve a heat dissipation problem during rapid charge/discharge (charge/discharge of a high rate of 3∼6C). In addition, when the battery module needs to be heated, heat in air flowing through the intermediate heat-dissipation air passage 51 is conducted to the cells 2 from the heat exchange surface of the intermediate heat-dissipation air passage 51 by using the intermediate heat-dissipation air plate 5, and heat in air flowing through the bottom heat-dissipation air passage 81 is conducted to the cells 2 from the heat exchange surface of the bottom heat-dissipation air passage 81 by using the bottom heat-dissipation air plate 8, to heat the battery module 100. In this way, a vehicle equipped with the battery module 100 can adapt to a cold area.

In addition, as shown in FIGs. 12-15, in another embodiment of the disclosure, the intermediate heat-dissipation air plate 5 is fixed on (snapped into) the intermediate separator 1 by using a detachable connection.

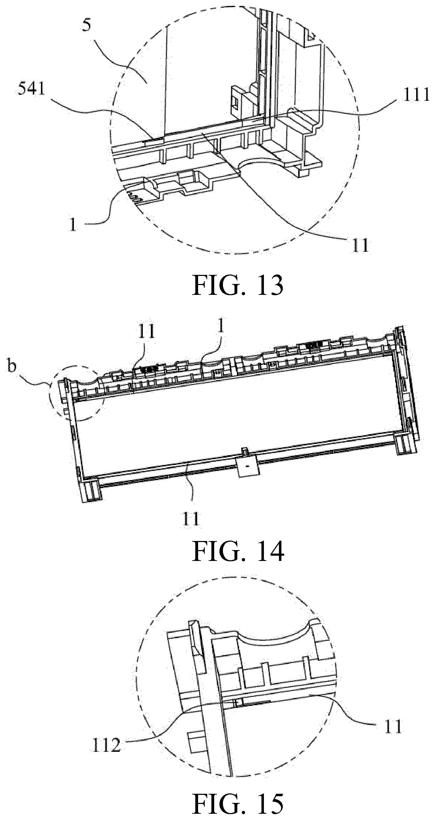

As shown in FIGs. 12 and 15, a guide groove 54 is provided on an upper side and a lower side of the intermediate heat-dissipation air plate 5, and a guide rail 11 that fits the guide groove 54 through sliding insertion is provided on a corresponding location on the intermediate separator 1. The guide groove 54 extends in a front and rear direction on the upper side or the lower side of the intermediate heat-dissipation air plate 5, a bayonet 541 is provided on one end of the guide groove 54, and a limiting block 111 is provided on a location that is on the guide rail 11 and that corresponds to the bayonet 541. The limiting block 111 is snapped into the bayonet 541 to limit a location at which the guide groove 54 is inserted into the guide rail 11. A snap-gauge 542 is provided on the other end of the guide groove 54, and an anti-detachment barb 112 is provided on a location that is on the guide rail 11 and that corresponds to the snap-gauge 542, and the anti-detachment barb 112 can hook the snap-gauge 542 when the guide groove 54 is inserted in place, to prevent the guide rail 11 from coming out of the guide groove 54, thereby steadily mounting the intermediate heat-dissipation air plate 5 on the intermediate separator 1.

In this specification, the one end that is of the guide groove 54 and that is provided with the bayonet 541 is a rear end of the guide groove (based on an orientation of the battery module 100), and the other end provided with the snap-gauge 542 is a front end of the guide groove 54 (based on the orientation of the battery module 100). The one end that is of the guide rail 11 and that is provided with the limiting block 111 is a rear end of the guide rail (based on the orientation of the battery module 100), and the other end that is of the guide rail 11 and that is provided with the anti-detachment barb 112 is a front end of the guide rail (based on the orientation of the battery module 100), respectively.

Compared with the integrally formed intermediate separator 1 shown in FIG. 16, in a manner of using a detachable connection, a precision requirement on an injection mold of the intermediate separator 1 can be reduced, and in addition, the intermediate heat-dissipation air plate 5 is separately formed, so that the intermediate heat-dissipation air passage 51 in the intermediate heat-dissipation air plate 5 is easier to mold, and assembly and repair costs are low.

In addition, as shown in FIGs. 17-19, an embodiment of the disclosure further provides a power battery pack, and the power battery pack includes a plurality of battery modules 100 and a housing consisting of a battery tray 200 and a battery pack sealing cover 300. The battery pack sealing cover 300 is connected to a top of the battery tray 200, to form battery module mounting space between the battery pack sealing cover 300 and the battery tray 200. The plurality of battery modules 100 are provided at intervals in the battery module mounting space, to form an external air passage 400 between two adjacent battery modules 100 and/or between the battery module 100 and an inner side wall of the housing, and the external air passage 400 leads to the intermediate heat-dissipation air passage 51 and the cavity 6 via the second tuyere 512. In addition, the external air passage 400 leads to the bottom heat-dissipation air passage 81 and the cavity 6 via the fourth tuyere 812.

In this embodiment, intermediate heat-dissipation air passages 51 in the plurality of battery modules 100 have a same direction. In addition, bottom heat-dissipation air passages 81 of the plurality of battery modules 100 have a same direction.

As shown in FIG. 17, the plurality of battery modules 100 are arranged in two rows of a same quantity, that is, each row has four battery modules 100 (that is, each column has two battery modules 100), and edges of the two battery modules 100 in each column are flush. In this way, intermediate heat-dissipation air passages 51 in two battery modules 100 in a same column are collinear, and bottom heat-dissipation air passages 81 of the two battery modules 100 in the same column are also collinear.

In this embodiment, the external air passage 400 includes an external circulation air passage 401 formed between the battery module 100 and the inner side wall of the battery stray 200 and an external central air passage 402 formed between the two rows of battery modules 100. A semiconductor cooling/heating module 500 is provided on two ends of the external central air passage 402, the external central air passage 401 leads to outside of the power battery back via the semiconductor cooling/heating module 500, and the semiconductor cooling/heating module 500 separates the external central air passage 402 from the external circulation air passage 401.

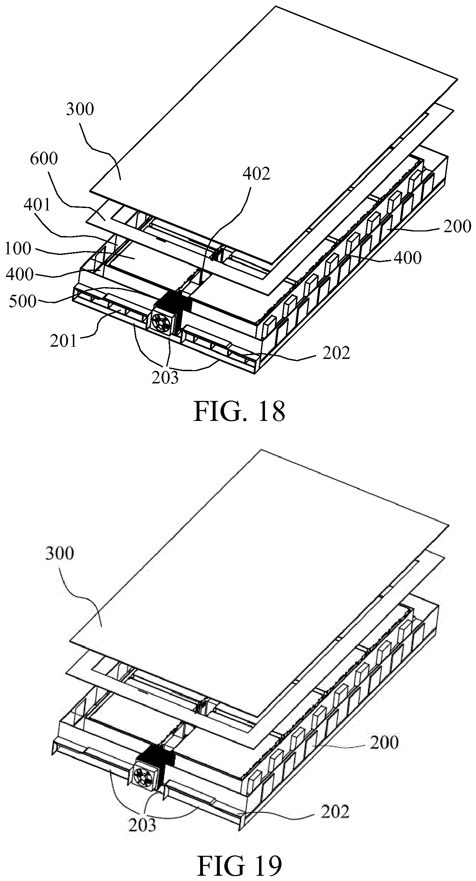

As shown in FIGs. 18 and 19, an internal circulation air passage protective cover 600 is provided between the battery pack sealing cover 300 and the battery tray 200.

As shown in FIG. 17, the two battery modules 100 in the same column are flush in a left and right direction, and the four battery modules 100 in the same row are flush in a front and rear direction. One row of battery modules 100 perform air inhale, and the other row of battery modules 100 perform air blowing.

In this embodiment, preferably, as shown in FIG. 17, battery modules 1#, 2#, 3#, and 4# are in a same row, and battery modules 5#, 6#, 7#, and 8# are in a same row. The battery module 1# and the battery module 8# are in a same column, the battery module 2# and the battery module 7# are in a same column, the battery module 3# and the battery module 6# are in a same column, and the battery module 4# and the battery module 5# are in a same column. Rear sides of the battery modules 1#, 2#, 3#, and 4# are facing rear sides of the battery modules 5#, 6#, 7#, and 8#. Fans 4 on the battery modules 1#, 2#, 3#, and 4# are used for blowing air, and form air blowing fans 4a, and fans 4 on the battery modules 5#, 6#, 7#, and 8# are used for inhaling air, and form air inhale fans 4b. In this way, an air circulation path in the power battery pack is as follows: external circulation air passage→battery modules 1#, 2#, 3#, and 4#→external central air passage→battery modules 5#, 6#, 7#, and 8#→external circulation air passage.

As shown in FIGs. 18 and 19, a tray heat-dissipation air passage 201 penetrating through the battery tray 200 is provided at the bottom of the battery stray 200, and a spoiler 202 is provided on an opening on a side of the stray heat-dissipation air passage 201 towards a front direction of a vehicle, and the spoiler 202 is provided with a spoiler air passage control cover 203 that is used to open or close the opening on the side that is of the stray heat-dissipation air passage 201 and that is towards the front direction of the vehicle.

Based on the power battery pack of the battery module 100, the semiconductor cooling/heating module 500 provided on the two ends of the external central air passage 402 can implement heat exchange between interior of the battery module 100 and the external air passage 400. In a case in which sealing of the power battery pack is not changed, heat dissipation (cooling) and heating functions of the power battery pack can be implemented by using air as a coolant.

The power battery pack can implement a heating mode and a multi-level cooling (heat dissipation) mode of the power battery pack. Details are as follows:

### Heating mode

As shown in FIGs. 17 and 19, when a temperature of the cell 2 is excessively low (for example, ≤10□), the heating mode is enabled. The spoiler air passage control cover 203 on the front end of the power battery pack is closed, and the tray heat-dissipation air passage 201 is isolated from the outside of the power battery pack, and therefore no air enters. A semiconductor heat exchange module 500 enables the heating mode, and the air blowing fan 4a used for blowing air and the air inhale fan 4b used for inhaling air for the serially-connected internal air passages (the intermediate heat-dissipation air passage 51 and the bottom heat-dissipation air passage 81) and the external air passage 400 are turned on. Air is heated when flowing through the semiconductor heat exchange module 500, and then enters intermediate heat-dissipation air passages 51 and bottom heat-dissipation air passages 81 in the battery modules 1#, 2#, 3#, and 4# via the air blowing fan 4a, to implement uniform and efficient heating of the battery modules 100 1#, 2#, 3#, and 4#. Then hot air from the battery modules 100 1#, 2#, 3#, and 4# flows through the external central air passage 402 and enters intermediate heat-dissipation air passages 51 and bottom heat-dissipation air passages 81 in the battery modules 100 5#, 6#, 7#, and 8#, to implement uniform and efficient heating of the battery modules 100 5#, 6#, 7#, and 8#. Finally, the air inhale fan 4b exhausts the air into the external circulation air passage 401, and so on.

### Cooling (heat dissipation) mode

Level 0 cooling: As shown in FIGs. 17 and 18, if a temperature of a vehicle is slightly high during driving, the spoiler air passage control cover 203 on the front end of the power battery pack can be opened. Air flows through the tray heat-dissipation air passage 201 at a high speed during driving, and takes away heat transferred from the battery module 100 to the battery tray 200, to dissipate heat of the battery module 100.

Level 1 cooling: A current direction of the semiconductor heat exchange module 500 is changed (opposite to that during heating), to convert the semiconductor heat exchange module 500 into a cooling mode, and the air blowing fan 4a used for blowing air is turned on (the air inhale fan 4b used for inhaling air is not turned on), to cool (dissipate heat of) the battery module 100.

Level 2 cooling: When the semiconductor heat exchange module 500 is in the cooling mode, the air blowing fan 4a used for blowing air and the air inhale fan 4b used for inhaling air are simultaneously turned on. Compared with the level 1 cooling mode, the air blowing fan 4a and the air inhale fan 4b are connected in series, a static pressure difference between the air blowing fan 4a and the air inhale fan 4b is increased, and flowing speeds of air in the internal air passages (the intermediate heat-dissipation air passage 51 and the bottom heat-dissipation air passage 81) in the battery module 100 are increased. Therefore, a heat dissipation effect is improved.

Level 0 cooling can be used only during driving of a vehicle, and level 1 and level 2 cooling can be used in any condition. Quantities of air blowing fans 4a and air inhale fans 4b that are turned on are adjusted and a power of the semiconductor heat exchange module 500 is adjusted, to implement different cooling effects, thereby meeting heat dissipation requirements of a vehicle during large-rate charge and in various different driving conditions.

According to the power battery pack in the foregoing embodiment of the disclosure, a ventilator of each battery module can inhale air from the second tuyere or blow air to the second tuyere via the intermediate heat-dissipation air passage and the cavity, so that air can circularly flow in the intermediate heat-dissipation air passage. Heat is continuously exchanged between two side surfaces of the intermediate heat-dissipation air passage that are in a stacking direction of the intermediate separators and side faces of larger areas on the cell, and an inner side wall of the intermediate heat-dissipation air passage is a heat dissipation surface, and a ratio of the heat dissipation surface to a surface area of the cell is far greater than 25%, and heat dissipation efficiency is high. Simulation and testing show that a battery module with cell energy of 50-80 Ah can implement continuous charge/discharge of 4C, and a battery module with cell energy of 20-40 Ah can implement continuous charge/discharge of 6C. It can be learned that the power battery pack of the disclosure can resolve a heat dissipation problem during rapid charge/discharge (charge/discharge of a high rate of 3∼6C). In addition, the plurality of battery modules of the power battery pack are provided at intervals in the battery module mounting space between the battery pack sealing cover and the battery tray, to form an external air passage between the battery modules and the inner side wall of the battery tray. The external air passage leads to the intermediate heat-dissipation air passage and the cavity through the second tuyere, so that the cooling/heating module provided in the external air passage can heat or cool air in the external air passage, to cool or heat the power battery pack.

In addition, the disclosure further provides a vehicle, and the vehicle includes the foregoing power battery pack.

The foregoing descriptions are merely preferred embodiments of the disclosure, but are not intended to limit the disclosure. Any modification, equivalent replacement, improvement, or the like made within the spirit and principle of the disclosure should fall within the protection scope of the disclosure.

## Claims

1. A battery module, comprising a plurality of intermediate separators stacked in a left and right direction in the battery module, a plurality of cells, a mounting plate provided on a front side of the battery module, and a ventilator fixed on the mounting plate, and an intermediate heat-dissipation air plate is provided on the intermediate separator , an intermediate heat-dissipation air passage penetrating through a front and rear direction is formed inside the intermediate heat-dissipation air plate, heat is exchanged between a left side face of the intermediate heat-dissipation air plate and a right side face of a cell on a left side of the intermediate heat-dissipation air plate, and heat is exchanged between a right side face of the intermediate heat-dissipation air plate and a left side face of a cell on a right side of the intermediate heat-dissipation air plate, the intermediate heat-dissipation air passage has a first tuyere and a second tuyere, a cavity is provided between the mounting plate and a front end face of the cell, the first tuyere leads to the cavity, and the second tuyere is provided on a rear side of the battery module and leads to outside of the battery module.

2. The battery module according to claim 1, wherein the intermediate heat-dissipation air plate and the intermediate separator are integrally formed .

3. The battery module according to claim 1, **characterized in that** a guide groove is provided on an upper side and a lower side of the intermediate heat-dissipation air plate, and a guide rail that fits the guide groove through sliding insertion is provided on a corresponding location on the intermediate separator.

4. The battery module according to claim 3, wherein the guide groove extends in a front and rear direction on the upper side or the lower side of the intermediate heat-dissipation air plate, a bayonet is provided on one end of the guide groove, a limiting block is provided on a location that is on the guide rail and that corresponds to the bayonet, and the limiting block is snapped into the bayonet to limit a location at which the guide groove is inserted into the guide rail.

5. The battery module according to claim 4, wherein a snap-gauge is provided on the other end of the guide groove, and an anti-detachment barb is provided on a location that is on the guide rail and that corresponds to the snap-gauge, and the anti-detachment barb can hook the snap-gauge when the guide groove is inserted in place, to prevent the guide rail from coming out of the guide groove.

6. The battery module according to claim 1, wherein a plurality of laminates are provided inside the intermediate heat-dissipation air plate, wherein the laminates are configured to separate the intermediate heat-dissipation air passage into a plurality of unit air passages.

7. The battery module according to claim 6, wherein a plurality of raised lines are provided in the unit air passage.

8. The battery module according to claim 2, wherein a first thermally conductive insulating pad is provided both between the left side face of the intermediate heat-dissipation air plate and the right side face of the cell on the left side of the intermediate heat-dissipation air plate and between the right side face of the intermediate heat-dissipation air plate and the left side face of the cell on the right side of the intermediate heat-dissipation air plate.

9. The battery module according to claim 1, wherein the battery module further comprises a bottom heat-dissipation air plate provided under a plurality of cells, heat is exchanged between an upper surface of the bottom heat-dissipation plate and a lower surface of the cell, and a bottom heat-dissipation air passage penetrating through a front-to-rear direction is formed inside the bottom heat-dissipation air plate, the bottom heat-dissipation air passage has a third tuyere and a fourth tuyere, the third tuyere leads to the cavity, and the fourth tuyere is provided on a rear side of the battery module and leads to outside of the battery module.

10. The battery module according to claim 9, wherein the bottom heat-dissipation air plate comprises a heat dissipation plate and a plurality of fins provided side by side on a bottom of the heat-dissipation plate, a bottom protective cover is provided under the bottom heat-dissipation air plate, and the bottom heat-dissipation air passage is formed between the bottom protective cover and the plurality of fins.

11. The battery module according to claim 10, wherein a second thermally conductive insulating pad is interposed between the heat dissipation plate and lower surfaces of the plurality of cells.

12. The battery module according to claim 10, wherein a first side plate is fixedly provided on an external side of the cell that is on a rightmost side of the battery module, and a second side plate is fixedly provided on an external side of the cell that is on a leftmost side of the battery module.

13. The battery module according to claim 12, wherein a right-side metal plate is fixed on an external side of the first side plate, and a left-side metal plate is fixed on an external side of the second side plate, a top protective cover is provided on a top of the battery module, a left side, a right side, an upper side, and a lower side of the mounting plate are respectively fixedly connected to the left metal plate, the right metal plate, the top protective cover, and the bottom protective cover, and a battery module management unit is fixedly provided on the mounting plate.

14. The battery module according to any one of claims 1-13, wherein the ventilator is a fan, the mounting plate is provided with a first fan mounting hole and a second fan mounting hole, and the fan is installed in the first fan mounting hole and the second fan mounting hole.

15. A power battery pack, comprising the battery module according to anyone of claims 1-14.

16. The power battery pack according to claim 15, wherein the intermediate heat-dissipation air passages in a plurality of battery modules have a same direction.

17. The power battery pack according to claim 15 or 16, wherein the power battery pack further comprises a housing consisting of a battery tray and a battery pack sealing cover, the battery pack sealing cover is connected to a top of the battery tray, to form battery module mounting space between the battery pack sealing cover and the battery tray, a plurality of battery modules are provided at intervals in the battery module mounting space, to form an external air passage between two adjacent battery modules and/or between the battery module and an inner side wall of the housing, and the external air passage leads to the intermediate heat-dissipation air passage and the cavity through the second tuyere.

18. The power battery pack according to claim 17, wherein the plurality of battery modules are arranged in two rows of a same quantity, and edges of two battery modules in each column are flush, the external air passage comprises an external circulation air passage formed between the battery module and the inner side wall of the battery stray and an external central air passage formed between the two rows of battery modules, a semiconductor cooling/heating module is provided on two ends of the external central air passage, and the semiconductor cooling/heating module separates the external central air passage from the external circulation air passage, the external central air passage leads to outside of the power battery back by using the semiconductor cooling/heating module, and one row of battery modules perform air inhale, and the other row of battery modules perform air blowing.

19. The power battery pack according to claim 17, wherein a tray heat-dissipation air passage penetrating through the battery tray is provided at the bottom of the battery stray, and a spoiler is provided on an opening on a side of the stray heat-dissipation air passage towards a front direction of a vehicle, and the spoiler is provided with a spoiler air passage control cover that is used to open or close the opening on the side that is of the stray heat-dissipation air passage and that is towards the front direction of the vehicle.

20. A vehicle, comprising the power battery pack according to any one of claims 15-19.
